# DEMANDE DE BREVET EUROPEEN

(11) **EP 4 310 479 A1**
(43) Date de publication de la demande: **24.01.2024**
(21) Numéro de dépôt: 23184533.0
(22) Date de dépôt: 10.07.2023
(51) Int. Cl.: G01N 15/14, G01N 21/01, G02B 21/00, G01N 15/02, G01N 21/47, G01N 15/00

(54) **DISPOSITIF D'IMAGERIE SANS LENTILLE**

(30) Priorité: 19.07.2022 FR 2207366
(71) Demandeur: Commissariat à l'énergie atomique et aux énergies alternatives, 75015 Paris (FR)
(72) Inventeur: MERMET, Xavier, 38054 Grenoble cedex 09 (FR); PAULUS, Caroline, 38054 Grenoble cedex 09 (FR)
(74) Mandataire: INNOV-GROUP

(57) **Abrégé**

L'invention concerne un dispositif d'imagerie sans lentille, comportant :
- Une partie émettrice comportant une source lumineuse (1) configurée pour émettre un faisceau lumineux suivant un sens d'émission et destiné à suivre un trajet optique,
- Une partie réceptrice intégrant une carte électronique (3) portant un capteur (2) ayant une surface de capture (20) plane destinée à recevoir ledit faisceau lumineux selon une direction normale à ladite surface de capture,
- Ledit trajet optique étant découpé en plusieurs tronçons optiques successifs, chaque tronçon optique correspondant à une direction de propagation distincte du faisceau lumineux.

## Description

### Domaine technique de l'invention

La présente invention se rapporte à un dispositif d'imagerie sans lentille. Le dispositif présente la particularité d'être particulièrement compact.

### Etat de la technique

Le principe d'imagerie sans lentille est employé pour observer des échantillons, notamment biologiques. Cette technique permet d'observer un échantillon (par exemple placé sur une lame transparente, une boîte de Petri) en le disposant entre une source lumineuse et un capteur d'image, sans disposer de lentille de formation d'image entre l'échantillon et le capteur. Le capteur d'image collecte une image d'une onde lumineuse diffractée par l'échantillon. L'imagerie sans lentille est une alternative simple et peu onéreuse à un microscope classique. La demande de brevet WO2013/178777A1 décrit un tel dispositif et son principe de fonctionnement.

Pour qu'un dispositif d'imagerie sans lentille soit efficace, le trajet parcouru par la lumière entre la source et le capteur doit être suffisamment long. Classiquement, la source lumineuse est placée au-dessus du capteur de manière à émettre un faisceau orienté perpendiculairement à la surface du capteur. Pour obtenir ce trajet optique d'une longueur suffisante en vue d'assurer la cohérence spatiale de l'onde, on adapte la hauteur de la source par rapport au capteur. Cette contrainte génère un encombrement important en hauteur et impacte la compacité du dispositif.

D'autres solutions sont décrites dans les demandes de brevet WO2021/239536A1 et EP1496349A1**.**

Le but de l'invention est de proposer un dispositif d'imagerie sans lentille qui s'avère particulièrement compact et facile à transporter et manipuler, tout en restant efficace et performant.

### Exposé de l'invention

Ce but est atteint par un dispositif d'imagerie sans lentille, comportant :
- Une partie émettrice comportant une source lumineuse configurée pour émettre un faisceau lumineux suivant un sens d'émission et destiné à suivre un trajet optique,
- Une partie réceptrice intégrant une carte électronique portant un capteur ayant une surface de capture plane destinée à recevoir ledit faisceau lumineux selon une direction normale à ladite surface de capture,
- Ledit trajet optique étant découpé en plusieurs tronçons optiques successifs, chaque tronçon optique correspondant à une direction de propagation distincte du faisceau lumineux,

Caractérisé en ce que :
- Le premier tronçon optique du trajet optique démarre de la source lumineuse vers un premier élément optique,
- Le dernier tronçon optique du trajet optique démarre d'un dernier élément optique et est orienté suivant une direction normale à la surface de capture du capteur,
- Le trajet optique comporte au moins deux tronçons optiques successifs du trajet optique qui sont situés dans un plan parallèle à la surface de capture du capteur.

Selon une particularité, la carte électronique comporte une première section délimitée dans un plan et la partie émettrice est logée dans un boîtier ayant une deuxième section inférieure ou égale à ladite première section.

Selon une autre particularité, chaque élément optique est composé d'un réflecteur.

Selon une autre particularité, chaque réflecteur est configuré et orienté pour recevoir ledit faisceau lumineux suivant une première direction et le rediriger suivant une deuxième direction symétrique de cette première direction par rapport à la normale au plan du réflecteur.

Selon une autre particularité, le capteur est de type CMOS.

Selon une autre particularité, le dispositif est intégré dans un boîtier monobloc.

Selon une autre particularité, le boîtier monobloc comporte :
- Une partie haute intégrant la partie émettrice,
- Une partie basse intégrant la partie réceptrice,
- Une partie de liaison entre la partie haute et la partie basse agencée pour définir un espace non nul entre ladite partie haute et la partie basse, ledit espace étant ménagé pour accueillir une chambre de visualisation d'un échantillon.

Selon une autre particularité, la partie basse du boîtier comporte un logement dans lequel est encastrée ladite carte électronique.

Selon une autre particularité, le boîtier monobloc est réalisé par l'assemblage de plusieurs modules entre eux, chaque module étant configuré pour former un tronçon optique distinct du trajet optique.

### Brève description des figures

D'autres caractéristiques et avantages vont apparaître dans la description détaillée qui suit faite en regard des dessins annexés dans lesquels :
- La figure 1 montre de manière schématique un premier mode de réalisation du dispositif de l'invention et illustre son principe de fonctionnement ;
- La figure 2 représente un deuxième mode de réalisation du dispositif de l'invention ;
- La figure 3 représente un mode de réalisation préféré du dispositif de l'invention ;

### Description détaillée d'au moins un mode de réalisation

Pour la suite de la description, on définit un repère orthonormé X, Y, Z tel que représenté sur les figures annexées.

Dans la suite de la description, les termes "haut", "bas", "au-dessus", au-dessous" sont à considérer par rapport à la direction Z verticale orientée vers le haut.

Dans la suite de la description, les termes "amont" et "aval" sont à considérer en tenant compte du sens de propagation du faisceau lumineux.

Selon l'invention, le dispositif fonctionne selon le principe de l'imagerie sans lentille.

Dans la présente description, l'expression "sans lentille" pour caractériser le principe d'imagerie utilisé par le dispositif, signifie que le dispositif ne comporte pas d'éléments optiques sous forme de lentilles sur le trajet du faisceau lumineux entre la source lumineuse et le capteur.

Le dispositif comporte donc des moyens d'émission d'un faisceau lumineux.

Les moyens d'émission comportent une source lumineuse 1.

La source lumineuse 1 est une source spatialement et temporellement cohérente ou semi-cohérente. La source lumineuse 1 est par exemple choisie parmi un laser, une diode Laser, une diode Laser de type VCSEL ou une ou plusieurs diodes électroluminescentes associées à un "pinhole".

La source lumineuse 1, vue par l'échantillon, est considérée comme ponctuelle. Cela signifie que son diamètre (ou sa diagonale) est préférentiellement inférieur au dixième, mieux au centième de la distance entre l'échantillon et la source lumineuse. Ainsi, de préférence, la lumière parvient à l'échantillon sous la forme d'ondes planes, ou pouvant être considérées comme telles.

Le dispositif comporte également un capteur 2, tel qu'un capteur d'images pixelisé, en deux dimensions. Le capteur 2 est propre à acquérir des images du rayonnement lumineux transmis par la chambre de visualisation éclairée par le faisceau lumineux.

Il peut notamment s'agir d'un capteur de type CCD (pour "Charge Coupled Device") ou CMOS (pour "Complementary Métal Oxide Semi-Conductor").

Le capteur 2 est par exemple apte à générer au moins une image toutes les 5 secondes, et la cadence d'acquisition est donc supérieure à 0,2 Hz. Elle est de préférence comprise entre 1Hz et 100Hz.

Le capteur 2 est par exemple monté sur une carte électronique 3. Il comporte une surface de capture 20 plane en deux dimensions (suivant X et Y). Sa surface de capture 20 correspond à la surface recevant le rayonnement transmis par la chambre de visualisation.

La carte électronique 3 comporte avantageusement des moyens de traitement tels qu'un microcontrôleur, configuré pour traiter les images de diffraction reçues par le capteur 2. Elle peut comporter une interface de communication, filaire ou sans-fil, pour envoyer des données vers un terminal distant (téléphone intelligent, ordinateur...). Elle peut également disposer d'une connectique adaptée pour y connecter une interface homme-machine (boutons, écran tactile ou autres).

L'échantillon peut être un échantillon biologique que l'on souhaite caractériser. L'échantillon est disposé entre la source lumineuse 1 et le capteur 2 d'images, idéalement à une distance maximum de 2mm du capteur.

L'échantillon à analyser est placé dans une chambre de visualisation 4, qui peut être par exemple une lame transparente ou une boîte de Petri, également transparente. Par le terme "transparent", on entend que la chambre de visualisation 4 laisse passer suffisamment du faisceau lumineux pour que le capteur puisse capter la majeure partie du rayonnement transmis à travers la chambre.

Selon l'invention, le trajet optique suivi par le faisceau lumineux entre la source lumineuse et le capteur est découpé en plusieurs tronçons optiques T_i successifs (avec i allant de 1 à N et N supérieur ou égal à 3).

Le premier tronçon optique T_1 du trajet optique démarre de la source lumineuse 1 vers un premier élément optique R_1.

Le dernier tronçon optique T_N du trajet optique démarre d'un dernier élément optique R_N-1 et traverse la chambre de visualisation 4 jusqu'au capteur 2. Ce dernier tronçon optique T_N suit une direction selon l'axe Z, de manière à traverser la chambre de visualisation 4 et à venir sur le capteur suivant une direction normale à la surface de capture 20 du capteur 2 (qui est réalisée suivant X, Y).

Entre le premier tronçon optique T_1 et le dernier tronçon optique T_N, le dispositif comporte au moins un tronçon optique supplémentaire, réalisé entre deux éléments optiques. Il peut notamment s'agir d'un tronçon optique réalisé entre le premier élément optique R_1 et le dernier élément optique R_N-1 décrits ci-dessus.

Selon l'invention, le trajet optique comporte au moins deux tronçons optiques successifs situés dans un plan parallèle à la surface de capture 20 du capteur.

De manière non limitative, chaque réflecteur R_i est par exemple un miroir configuré pour recevoir un faisceau lumineux selon une première direction et pour renvoyer ce faisceau selon une deuxième direction symétrique à cette première direction (et distincte de celle-ci) par rapport à la normale au plan du miroir, et de manière simplifiée selon une deuxième direction perpendiculaire à la première direction si cette première direction à un angle d'incidence sur le miroir de 45°.

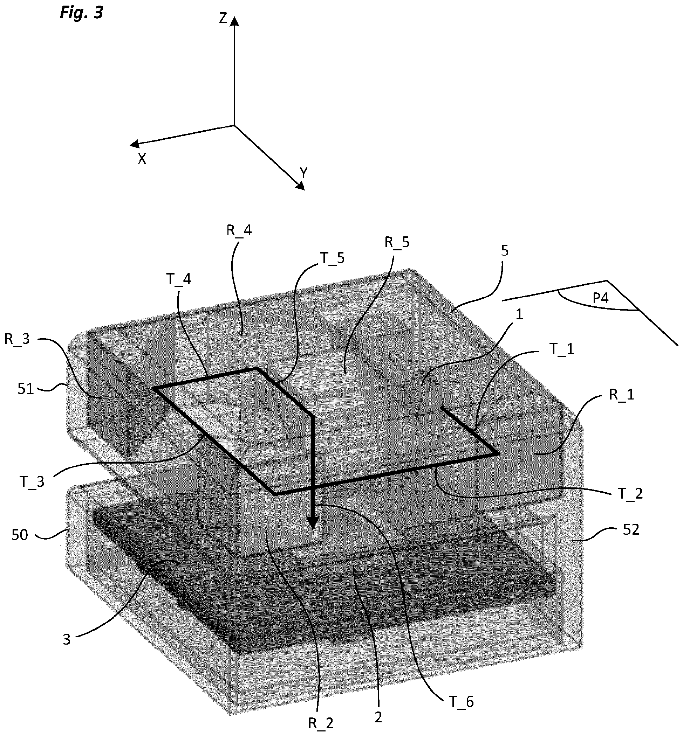

De manière non limitative, le dispositif présente une architecture dans laquelle la partie émettrice (source lumineuse+réflecteur(s)) est logée dans un unique premier boîtier, réalisé de manière monobloc. La partie réceptrice (carte électronique avec capteur) peut être placée dans un boîtier indépendant fixé audit premier boîtier ou directement intégrée dans ledit premier boîtier (voir description ci-après en liaison avec la figure 3).

Partant de ces principes, plusieurs modes de réalisation peuvent être envisagés. Pour s'adapter à ces contraintes, le dispositif comporte ainsi plusieurs réflecteurs permettant de diviser le trajet optique en plusieurs tronçons optiques successifs.

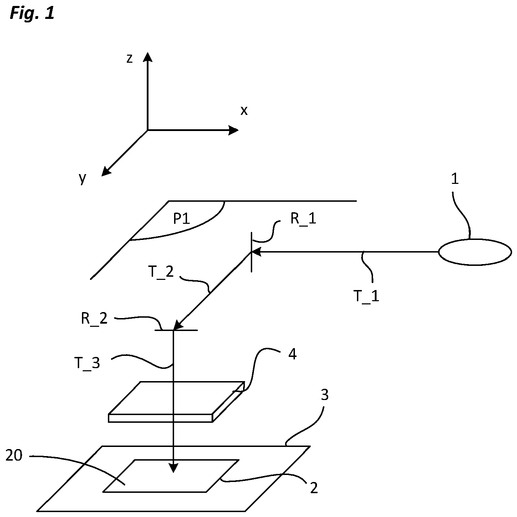

En référence à la figure 1, selon une première réalisation simplifiée, le trajet optique comporte trois tronçons optiques. Cette première réalisation consiste à positionner la source lumineuse 1 de manière à émettre dans un plan P1 parallèle à celui défini par les axes X et Y. Le premier tronçon optique suit donc une première direction selon Y dans le plan P1. Le premier réflecteur R_1 reçoit le faisceau en provenance de la source lumineuse 1 et est orienté pour le diriger suivant une deuxième direction, distincte de la première direction, toujours située dans le plan P1, par exemple selon X. Le deuxième tronçon optique T_2 va donc du premier réflecteur R_1 jusqu'au deuxième réflecteur R_2. Le deuxième réflecteur R_2 est orienté pour diriger le faisceau jusqu'au capteur 2, de manière à former le dernier tronçon optique T_3 du trajet, selon Z. Cette première réalisation utilise ainsi uniquement deux éléments optiques de type réflecteur.

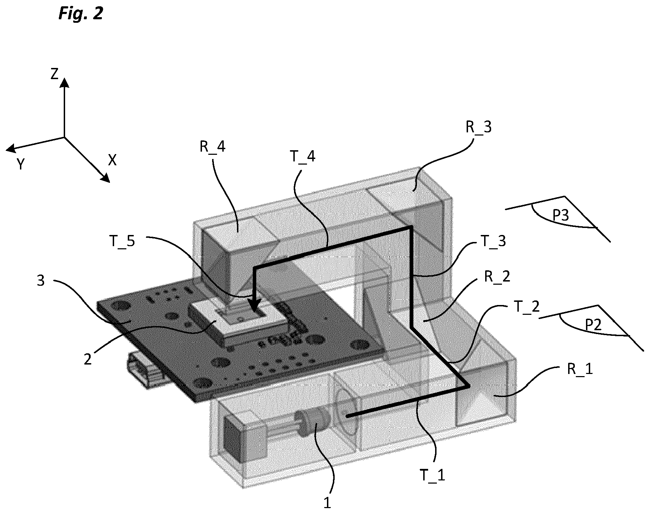

En référence à la figure 2, une deuxième variante de réalisation utilise quatre éléments optiques de type réflecteur.

Le premier tronçon optique T_1 allant de la source lumineuse 1 vers le premier réflecteur R_1 suit une première direction selon Y dans un plan P2 parallèle à la surface de capture. Le premier réflecteur R_1 est orienté de manière à envoyer le faisceau suivant une deuxième direction, par exemple selon X, formant ainsi le deuxième tronçon optique T_2 en direction du deuxième réflecteur R_2. Le deuxième réflecteur R_2 est orienté pour diriger le faisceau selon Z, jusqu'à un troisième réflecteur R_3, formant le troisième tronçon optique T_3. Le troisième réflecteur R_3 est orienté pour diriger le faisceau lumineux suivant une direction selon Y située dans un autre plan P3, parallèle à P2, distinct de celui-ci et situé au-dessus du plan P2 et de la surface de capture 20, formant un quatrième tronçon optique T_4. Un dernier réflecteur R_4 est orienté pour former le dernier tronçon optique T_5 selon Z, normale à la surface de capture 20.

Une variante avantageuse est décrite sur la figure 3. Selon cette variante, l'encombrement du dispositif dans le plan défini par les axes X et Y est défini par la taille de la carte électronique 3 portant le capteur 2. Par ailleurs, le dispositif peut être réalisé selon une architecture entièrement monobloc, avec un unique boîtier 5 intégrant la partie émettrice et la partie réceptrice.

A titre d'exemple, sur la figure 3, la carte électronique 3 présente une forme rectangulaire et est intégrée dans une partie basse 50 du boîtier, cette partie basse recevant en encastrement la carte électronique. Une partie haute 51 du boîtier intègre la partie émettrice du dispositif. Elle loge la source lumineuse et plusieurs réflecteurs. La zone située entre la partie basse du boîtier et la partie haute du boîtier correspond à une zone d'accueil de l'échantillon (par exemple sous la forme d'une lame transparente ou d'une boîte de Pétri).

Dans cette variante, le dispositif dispose de cinq réflecteurs. La source lumineuse 1 est orientée pour émettre selon une première direction, par exemple selon Y, formant le premier tronçon optique T_1. Le premier réflecteur R_1 est orienté pour rediriger le faisceau dans le même plan P4, selon X, formant le deuxième tronçon optique T_2. Le deuxième réflecteur R_2 reçoit le faisceau et est orienté pour le rediriger à nouveau selon Y, formant le troisième tronçon optique T_3 parallèle au premier tronçon optique. Le troisième réflecteur R_3 est orienté pour rediriger le faisceau selon X, formant le quatrième tronçon optique T_4, parallèle au deuxième tronçon optique. Le quatrième réflecteur R_4 est orienté pour rediriger le faisceau selon Y, formant le cinquième tronçon optique T_5 parallèle au premier tronçon optique. Le dernier réflecteur R_5 est orienté pour rediriger le faisceau selon Z à destination de la chambre de visualisation 4 et perpendiculairement à la surface de capture 20 du capteur 2. Dans cette architecture, au niveau de la partie émettrice, en amont du dernier tronçon optique, le faisceau reste dans un même plan parallèle à la surface de capture 20 et suit ainsi une trajectoire en escargot.

La partie basse 50 du boîtier 5 et la partie haute 51 du boîtier 5 peuvent être reliées par une partie de liaison 52, définissant la longueur du dernier tronçon optique T_5. Dans cette variante de réalisation, il serait possible de prévoir des moyens de réglage en hauteur, pour régler l'écartement entre la partie émettrice et la partie réceptrice et ainsi régler la longueur du dernier tronçon optique. Ce réglage en hauteur permettrait à la fois d'ajuster la longueur totale du trajet optique et de pouvoir adapter la hauteur de la zone d'accueil de l'échantillon située entre les deux parties 50, 51 du boîtier.

De la source lumineuse 1 jusqu'à la chambre de visualisation 4, le trajet optique est avantageusement d'une première longueur comprise entre 1cm et 30cm, par exemple 8cm.

De la chambre de visualisation au capteur, le trajet optique est d'une deuxième longueur, avantageusement inférieure à 1cm, de préférence comprise entre 100µm et 2mm. Le fait de privilégier une distance courte entre la chambre de visualisation 4 et le capteur 2 permet de limiter les phénomènes d'interférences entre les figures de diffraction. En effet lorsque cette distance augmente, ces interférences sont susceptibles de rendre l'image inexploitable, notamment lorsque le nombre de particules présentes dans l'échantillon analysé augmente.

De manière avantageuse, la solution de l'invention peut être réalisée de manière modulaire. A titre d'exemple, chaque tronçon optique T_i peut être matérialisé par un module distinct, les modules étant assemblées entre eux pour former l'architecture du dispositif. De même la partie réceptrice peut être un module distinct. Des moyens d'assemblage peuvent être prévus pour assembler les modules entre eux. Chaque module intègre ainsi un ou deux réflecteurs.

La solution de l'invention présente ainsi de nombreux avantages. Le dispositif final s'avère particulièrement compact.

## Revendications

1. Dispositif d'imagerie sans lentille, comportant :
- Une partie émettrice comportant une source lumineuse (1) configurée pour émettre un faisceau lumineux suivant un sens d'émission et destiné à suivre un trajet optique,
- Une partie réceptrice intégrant une carte électronique (3) portant un capteur (2) ayant une surface de capture (20) plane destinée à recevoir ledit faisceau lumineux selon une direction normale à ladite surface de capture,
- Ledit trajet optique étant découpé en plusieurs tronçons optiques successifs, chaque tronçon optique correspondant à une direction de propagation distincte du faisceau lumineux,
**Caractérisé en ce que** :
- Le premier tronçon optique (T_1) du trajet optique démarre de la source lumineuse vers un premier élément optique,
- Le dernier tronçon optique (T_N) du trajet optique démarre d'un dernier élément optique et est orienté suivant une direction normale à la surface de capture du capteur,
- Le trajet optique comporte au moins deux tronçons optiques successifs du trajet optique qui sont situés dans un plan parallèle à la surface de capture du capteur (2).

2. Dispositif selon la revendication 1, **caractérisé en ce que** la carte électronique (3) comporte une première section délimitée dans un plan et **en ce que** la partie émettrice est logée dans un boîtier ayant une deuxième section inférieure ou égale à ladite première section.

3. Dispositif selon la revendication 1 ou 2, **caractérisé en ce que** chaque élément optique est composé d'un réflecteur (R_i).

4. Dispositif selon la revendication 3, **caractérisé en ce que** chaque réflecteur est configuré et orienté pour recevoir ledit faisceau lumineux suivant une première direction et le rediriger suivant une deuxième direction symétrique de cette première direction par rapport à la normale au plan du réflecteur.

5. Dispositif selon l'une des revendications 1 à 4, **caractérisé en ce que** le capteur (2) est de type CMOS.

6. Dispositif selon l'une des revendications 1 à 5, **caractérisé en ce que** le dispositif est intégré dans un boîtier (5) monobloc.

7. Dispositif selon la revendication 6, **caractérisé en ce que** le boîtier monobloc comporte :
- Une partie haute (51) intégrant la partie émettrice,
- Une partie basse (50) intégrant la partie réceptrice,
- Une partie de liaison (52) entre la partie haute et la partie basse agencée pour définir un espace non nul entre ladite partie haute et la partie basse, ledit espace étant ménagé pour accueillir une chambre de visualisation (4) d'un échantillon.

8. Dispositif selon la revendication 7, **caractérisé en ce que** la partie basse (50) du boîtier comporte un logement dans lequel est encastrée ladite carte électronique (3).

9. Dispositif selon l'une des revendications 6 à 8, **caractérisé en ce que** le boîtier (5) monobloc est réalisé par l'assemblage de plusieurs modules entre eux, chaque module étant configuré pour former un tronçon optique distinct du trajet optique.
